# EUROPEAN PATENT SPECIFICATION

(11) **EP 3 933 280 B1**
(45) Date of publication and mention of the grant of the patent: **28.08.2024**
(21) Application number: 20183898.4
(22) Date of filing: 03.07.2020
(51) Int. Cl.: F24D 3/08, F24D 3/18, F24D 10/00, F24D 17/02

(54) **A LOCAL HEAT EXTRACTING ASSEMBLY**
LOKALE WÄRMEEXTRAKTIONSANORDNUNG
ENSEMBLE LOCAL D'EXTRACTION DE CHALEUR

(43) Date of publication of application: 05.01.2022
(73) Proprietor: E.ON Sverige AB, 205 09 Malmö (SE)
(72) Inventor: Rosén, Per, 227 33 Lund (SE); Skogström, Jacob, 234 42 Lomma (SE); Carlström, Helen, 237 36 Bjärred (SE); Lindoff, Bengt, 237 35 Bjärred (SE)
(74) Representative: AWA Sweden AB

(56) References cited:
- EP-A1- 3 553 396
- EP-A1- 3 608 596
- WO-A1-2010/145040
- WO-A2-2010/102626
- WO-A2-2011/105881

## Description

### Field of the invention

The present invention relates to heating of buildings, more specifically to a local heat extracting assembly connectable to a local energy distributing system and to a local energy distributing system comprising a local heat extracting assembly.

### Background art

District heating systems are commonly used in many parts of the word for providing heating to various types of buildings, such as to residential buildings, to office buildings and many other types of buildings as well. District heating systems typically rely on heat transfer fluid that is heated in a thermal energy plant of some sort, such as e.g. a geothermal plant or a fossil fuel based thermal power plant.

The heat transfer fluid is then transported in a grid of conduits to the buildings where heat is extracted from the heat transfer fluid, typically by means of a number of heat exchangers. The extracted heat may be used e.g. for providing comfort heating, i.e. for providing heating to spaces in the associated buildings and for providing tap hot water.

In order for a sufficient amount of heat to be delivered by the heat transfer fluid, a certain flow rate is required along with a certain temperature of the heat transfer fluid. This causes problems, especially when it is desired to expand existing district heating grids to cover larger areas and more buildings. The result may be that the power plant and or the distric heating grid is unable to achieve the required temperatures and/or pressures required to be able to deliver the desired amount of heat from the heat transfer fluid to the district heating system.

In order to use residual heat in the return of a district heating network, EP 3553396 A1 proposes a district heating extraction station with a heat storage device and a heat pump, which allows heat to be extracted from the district heating network at a lower temperature than a required or desired temperature allows. The district heating supply station lowers a return temperature and thereby a heat loss in the return of the district heating network.

WO 2010145040 A1 dislcoses a district energy sharing system (DESS) comprising a thermal energy circuit which circulates and stores thermal energy in water, at least one client building thermally coupled to the circuit and which removes some thermal energy from the circuit ("thermal sink") and/or deposits some thermal energy into the circuit ("thermal source"), and at least one thermal server plant that can be thermally coupled to external thermal sources and/or sinks (e.g. a geothermal ground source) and whose function is to maintain thermal balance within the DESS.

EP3608596 A1 discloses a local heat extracting assembly. The local heat extracting assembly having one inlet connectable to a local feed conduit of a local energy distributing system, and one outlet connectable to a local return conduit of the local energy distributing system. The local heat extracting assembly comprises: a local heat exchanger configured to extract heat from local heat transfer fluid of the local feed conduit to a heating liquid of a heating circuit configured to circulate the heating liquid in a building for providing comfort heating; and a heat pump configured to pump heat from the heating liquid of the heating circuit or from local heat transfer fluid of the local feed conduit to provide hot tap water to the building. A local energy distributing system comprising a plurality of local heat extracting assembly is further disclosed. Further, a method for extracting heat from the local energy distributing system and a method for distributing energy to a plurality of buildings are disclosed.

WO2010102626 A2 discloses a closed loop heating system comprising at least one closed fluid circuit, at least one thermal energy receiving unit (and at least one thermal energy releasing unit. The closed loop heating system also comprises a heat pump, transferring thermal energy from at least one first part of said fluid circuit to at least one second part of said fluid circuit.

WO 2011105881 A2 discloses a centralized heat and hot water supply system.

### Summary of the invention

In view of that stated above, the object of the teachings herein is to provide a local heat extracting assembly and a local energy distributing system that alleviates some of the problems with prior art solutions.

To achieve at least one of the above objects and also other objects that will be evident from the following description, there is provided according to a first aspect a local heat extracting assembly having an inlet connectable to a local feed conduit of a local energy distributing system and an outlet connectable to a local return conduit of the local energy distributing system. The local heat extracting assembly comprises:
an intermediate circuit configured to circulate intermediate heat transfer fluid;
a heating circuit comprising a feed conduit and a return conduit, the heating circuit being configured to circulate heat transfer fluid in a building for providing comfort heating
a first heat exchanger configured to extract heat from local heat transfer fluid of the local feed conduit to intermediate heat transfer fluid of the intermediate circuit; and
a heat pump configured to pump heat from intermediate heat transfer fluid of the intermediate circuit to heat transfer fluid of the heating circuit. The local heat extracting assembly being a heat pump based thermal transfer system allows effective heat extraction and thus allows a heat reduction in the local energy distributing system. The local energy distributing system can thus circulate local heat transfer fluid with reduced temperature in relation to prior art systems, facilitating prevention of heat losses therefrom due to the decreased differential temperature between the local heat transfer fluid and the surrounding ground in which the local energy distributing system is buried.

The local heat extracting assembly further comprise a tap hot water preparation system comprising a heater configured to heat tap hot water in the tap hot water preparation system. The heater is connected to the heating circuit by a heat transfer fluid inlet connected to the feed conduit of the heating circuit and by a heat transfer fluid outlet connected to the return conduit of the heating circuit.

The local heat extracting assembly further comprise a tap hot water heat exchanger configured to transfer heat from local heat transfer fluid in a tap hot water heat exchanger inlet to tap hot water in a tap hot water inlet of the heater.

The heat transfer fluid inlet may be connected to the feed conduit of the heating circuit via a control valve configured to selectively control the flow of heat transfer fluid in the heat transfer fluid inlet of the heater, thus controlling the temperature of the tap hot water in the heater.

The tap hot water inlet may be connected to a fresh water supply and a tap hot water supply conduit from the heater may be connected to the fresh water supply, thus reducing the risk of that tap hot water that is too warm is supplied to the building.

The intermediate heat transfer fluid of the intermediate circuit may be fluidly separated from the local heat transfer fluid of the local energy distributing system.

The heat transfer fluid of the heating circuit may be fluidly separated from the intermediate heat transfer fluid of the intermediate circuit. Each separation provides individual circuits in which smaller circulation pumps can be used as lower pressures are required to achieve the desired flow rate.

The heating circuit heat transfer fluid in the heating circuit feed conduit may be heated by the heat pump to between 30°C and 70°C, preferably between 40°C and 60°C.

In a second aspect is a local energy distributing system provided. The local energy distributing system is connected to a district heating grid, the local energy distributing system comprising a local feed conduit and a local return conduit for circulating local heat transfer fluid. The local energy distributing system comprises at least one local heat extracting assembly according to the first aspect. The provision of the local energy distributing system facilitates expansion of the district heating grid such that district heating can be provided to more remote locations/buildings. More heat can be extracted from the heat transfer fluid provided by the district heating grid, reducing the flow rate demands on the district heating grid and facilitating expansion thereof.

Local heat transfer fluid of the local energy distributing system may be fluidly separated from district heating heat transfer fluid of the district heating grid.

The local energy distributing system may be connected to the district heating grid via a local energy distributing system heat exchanger configured to transfer heat from the district heating heat transfer fluid to the local heat transfer fluid.

The temperature of the local heat transfer fluid in the local feed conduit may be between 30°C and 50°C, preferably approximately 40°C and the temperature of the local heat transfer fluid in the local return conduit may be between 5°C and 35°C. The local energy distributing system will thus have a relatively low temperature of the local heat transfer fluid therein, reducing losses and reducing the required insulation needed for the system. Accordingly, the complexity of installing the system, i.e. placing the local energy distributing system in the ground, can be reduced.

The local energy distributing system heat exchanger may be connected to the district heating grid via a main supply conduit connected to a hot conduit of the district heating grid and a main return conduit connected to a cold conduit of the district heating grid. The district heating heat transfer fluid in the main supply conduit may be between 75°C and 110°C and the local energy distributing system heat exchanger may be is controlled such that the district heating heat transfer fluid in the main return conduit is between 7°C and 33°C. A high temperature differential is thus achieved between the main supply conduit and the main return conduit, which thus means a high thermal energy transfer for a given flow rate of district heating heat transfer fluid. Such a high thermal energy transfer is achieved as the thermal transfer takes place in several steps and by the provision of the local heat extracting assemblies comprising a heat pump which is effective using lower heat transfer fluid temperatures.

The local energy distributing system may further comprise a main control valve configured to control the flow between the local energy distributing system heat exchanger and the district heating grid.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Figure 1 discloses a schematic flow chart of a local energy distributing system connected to a district heating grid and comprising a local heat extracting assembly, not according to the invention.
Figure 2 discloses a schematic flow chart of a local energy distributing system connected to a district heating grid and comprising a local heat extracting assembly.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

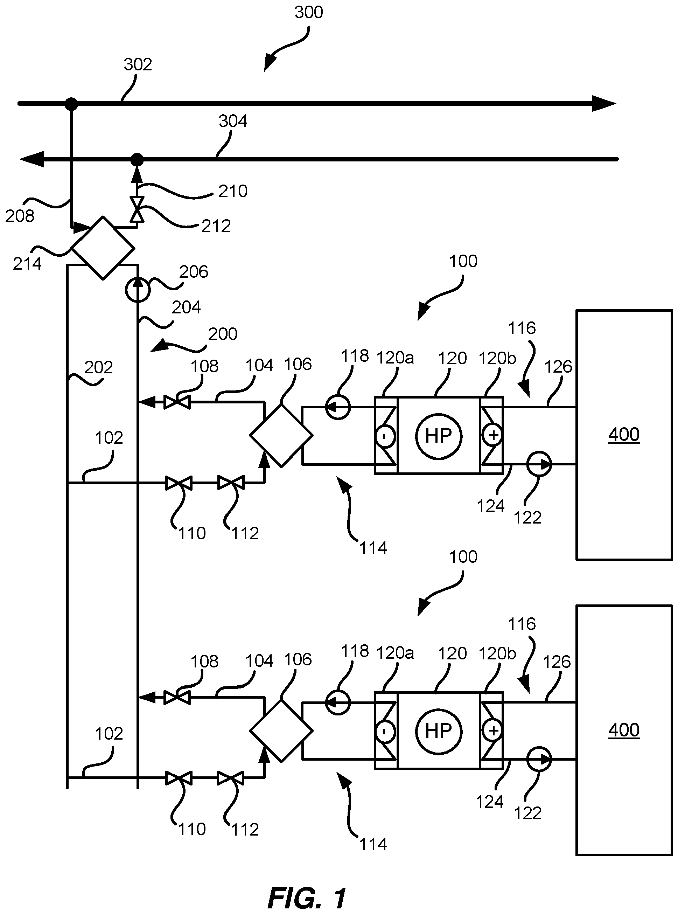

Figure 1 shows a schematic flow chart of two local heat extracting assemblies 100 connected to a local energy distributing system 200 which in turn is connected to a district heating grid 300.

Each local heat extracting assembly 100 has an inlet 102 connectable to a local feed conduit 202 of the local energy distributing system 200 and an outlet 104 connectable to a local return conduit 204 of the local energy distributing system 200.

The district heating grid 300 may be a conventional district heating system which is connected to a thermal plant for providing thermal energy transported by district heating heat transfer fluid from which heat can be extracted by one or several local energy distributing systems 200. Heat transfer fluid is in context of the present disclosure intended as a fluid medium which is suitable for transporting thermal energy, such as water or water and glycol mixture or similar.

Each local energy distributing system 200 is preferably connected to the district heating grid 300 via a local energy distributing system heat exchanger 214 configured to transfer heat from the district heating heat transfer fluid to the local heat transfer fluid in the local energy distributing system 200. The district heating grid 300 is thus preferably fluidly separated from each local energy distributing grid 200. The fluid separation facilitates circulation of the district heating heat transfer fluid as the district heating grid 300 does not have to deliver heat transfer fluid throughtout the local energy distributing system 200. The pressure that must be provided to in the district heating grid 300 to achieve the desired flow rate of district heating heat transfer fluid can thus be reduced. This is achieved as the effective length of the of district heating grid 300 is reduced/maintained by providing the local energy distributing system 200 which is further separated into several fluidly separated parts, each interconnected via heat exchangers and/or heat pumps.

The local energy distributing system 200 may be connected to the district heating grid 300 via a main supply conduit 208 connected to a hot conduit 302 of the district heating grid 300 and via a main return conduit 210 connected to a cold conduit 304 of the district heating grid 300.

The temperature of the district heating heat transfer fluid in the main supply conduit 208 may be between 75°C and 110°C and the local energy distributing system heat exchanger 214 may be controlled such that the district heating heat transfer fluid in the main return conduit 210 is between 7°C and 33°C.

Such high temperature difference between the main supply conduit 208 and the main return conduit 210 facilitates keeping the flow rate of district heating heat transfer fluid low while achieving the desired thermal transfer to the local energy distributing system 200, thus reducing the load on the district heating grid 300.

The provision of the local energy distributing system heat exchanger 214 allows the transfer of thermal energy from the district heating grid 300 to the local energy distributing system 200 to be controlled. However, a main control valve 212 may also be provided which is configured to control the flow between the district heating grid 300 and the local energy distributing system heat exchanger 214. The main control valve 212 is shown being arranged on the main return conduit 210 but it may alternatively or in addition also be arranged on the main supply conduit 208. The main control valve 212 is thus configured to control the flow of district heating heat transfer fluid through the local energy distributing system heat exchanger 214, which is preferably controlled in relation to at least one of the thermal load which is exerted onto the local energy distributing system 200 by each of the heat extracting assemblies 100 connected thereto, the temperature and/or flowrate of local heat transfer fluid in the local energy distributing system 200 and the temperature and/or flowrate of the district heating grid heat transfer fluid in the main supply conduit 208 and/or in the main return conduit 210.

The temperature of the local heat transfer fluid in the local feed conduit 202 may be controlled by the local heat exchanger 214 and/or the main control valve 212 such that it is between 30°C and 50°C, preferably approximately 40°C. As such, a reduction of the temperature of the local heat transfer fluid is achieved in relation to the district heating heat transfer fluid.

The temperature of the local heat transfer fluid in the local return conduit 204, which depends on the amount of heat that is extracted by each local heat extracting assembly 100 connected to the local energy distributing system 200, is between 5°C and 35°C.

A local energy distributing system circulation pump 206 may also be provided, for achieving the desired flow rate of local heat transfer fluid in the local energy distributing system 200. The local energy distributing system circulation pump 206 may further be configured to achieve the desired flow rate of local heat transfer fluid to each of the local heat extracting assemblies 100. It is to be realized that for achieving the desired flow rate, each circulation pump described herein may be controlled directly by a flow rate sensor and/or indirectly by means of one or several pressure sensors for achieving a desired pressure in the circuit to which the circulation pump is connected. Each circulation pump may also be controlled in response to temperatures of the heat transfer fluid in each respective circuit to which the respecitive circulation pump is connected. The aforementioned is applicable to each of the circulation pumps 206, 118, 122, 148 in the present disclosure.

The local heat extracting assembly 100 comprises a first heat exchanger 106 configured to extract heat from local heat transfer fluid provided from the local feed conduit 202 via the local heat extracting assembly inlet 102 and deposit the heat to an intermediate heat transfer fluid of an intermediate circuit 114 configured to circulate intermediate heat transfer fluid.

The local heat extracting assembly inlet 102 may be provided with a first and optionally a second inlet control valve 110, 112. The local heat extracting assembly outlet 104 may be provided with an outlet control valve 108. The flow rate of local heat transfer fluid from the local energy distributing system 200 to the first heat exchanger 106 can thus be controlled by either of the aforementioned control valves 110, 112, 108 individually for each heat extracting assembly 100. The control valves 110, 112, 108 may be controlled in respect of a first heat exchanger 106 pinch point of 1 °C - 5°C, preferably approximately 4°C. I.e. such that in case a temperature of the local heat transfer fluid in local heat extracting assembly inlet 102 is 30°C, the control valves 110, 112, 108, or one of the control valves 110, 112, 108, may control the first heat exchanger 106 to heat intermediate heat transfer fluid in the intermediate circuit 114 to between 29°C and 25°C.

The flow rate of local heat transfer fluid to the first heat exchanger 106 may be controlled by one or several of the control valves 110, 112, 108 such that a desired temperature difference of the local heat transfer fluid over the first heat exchanger 106 is achieved and/or such that a desired temperature difference is achieved of the intermediate heat transfer fluid over the first heat exchanger 106 and/or in response to a thermal load request from a heat pump 120 of the local heat extracting assembly 100.

The intermediate heat transfer fluid in the intermediate circuit 114 is preferably fluidly separated from the local heat extracting fluid in the local energy distributing system 200.

Moreover, the intermediate circuit 114 may be provided with an intermediate circulation pump 118 configured to circulate intermediate heat transfer fluid. The intermediate circulation pump 118 is configured to deliver the desired flow rate of intermediate heat transfer fluid between the first heat exchanger 106 and the heat pump 120.

The heat pump 120 is provided connected to the intermediate circuit 114, the heat pump 120 being configured to pump heat from the intermediate heat transfer fluid of the intermediate circuit 114 to a heating circuit heat transfer fluid of a heating circuit 116. The heat pump 120 thus extracts heat from the intermediate heat transfer fluid and deposits heat into the heating circuit 116. Heating circuit heat transfler fluid is thus fluidly separated from intermediate heat transfer fluid of the intermediate circuit 114.

The heat pump 120 comprises a heat extracting side 120a connected to the intermediate circuit 114 and configured to extract heat therefrom. The heat pump 120 further comprises a heat depositing side 120b connected to the heating circuit 116 and configured to deposit heat to heat transfer fluid therein.

The heat pump 120 may be embodied in many forms and is a device considered to be familiar to a person skilled in the art. The heat pump 120 will thus not be described in further detail herein.

The heating circuit 116 further comprises a feed conduit 124 and a return conduit 126, the heating circuit 116 being configured to circulate the heating circuit heat transfer fluid to/in a building 400 for providing comfort heating. The heating circuit 116 may be provided with a heating circuit circulation pump 122 for circulating heating circuit heat transfer fluid. The heating circuit circulation pump 122 is shown being arranged on the heating circuit feed conduit 124 but it could also be arranged on the heating circuit return conduit 126. The heating circuit circulation pump 122 is configured to be controlled in relation to a thermal load request from the building 400, specifically of the heating system thereof. I.e. such that a desired temperature can be achieved in the building 400, which is determined by the flow rate of heating circuit heat transfer fluid provided by the heating circuit circulation pump and/or the heat deposited to the heating circuit heat transfer fluid by the heat pump 120.

The heating circuit 116 provides heated heating circuit heat transfer fluid to the building 400 which may be extracted in the building in one or several different ways as is realized by one skilled in the art. For instance, the heating circuit 116 could be connected to an underfloor heating system, to a radiator system and/or to one or several further heat pumps or heat exchangers that extract heat and delivers it to the building 400 via a heat transfer medium such as liquid or air.

As is further illustrated in Fig. 1, several heat extracting assemblies 100 may be connected to the local energy distributing system 200. The two heat extracting assemblies 100 are shown being associated with different buildings 400, it is however to be realized more than one heat extracting assembly 100 may be associated with each building 400.

The heat transfer fluid in the heating circuit feed conduit 124 may be heated by the heat pump 120 to between 30°C and 70°C, preferably between 40°C and 60°C.

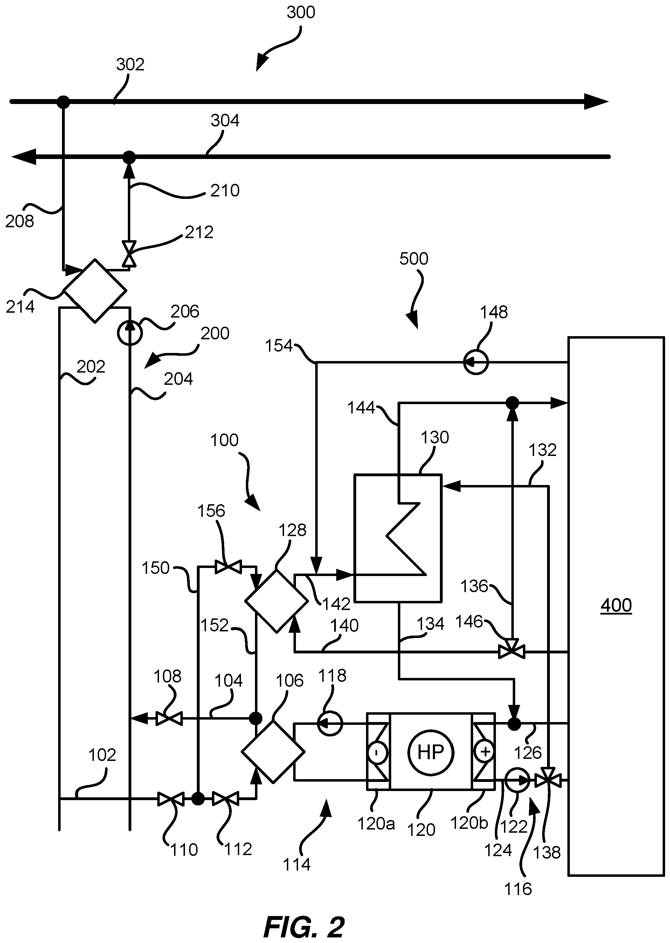

Turning now to Fig. 2 which shows one embodiment in which the local heat extracting assembly 100 comprises a tap hot water preparation system 500. The tap hot water system 500 being configured to provide the building 400 with tap hot water, i.e. heated fresh water. The local heat extracting assembly 100, the local thermal energy distributing system 200 and the district heating grid 300 in Fig. 2 shares many features with the embodiment shown in Fig. 1, for these common features is reference made to the description of Fig. 1 while in the following will emphasis be placed on the features that are related specifically to the embodiment shown in Fig. 2.

The local heat extracting assembly 100, specifically the tap hot water system 500 thereof, shown in Fig. 2 comprises a heater 130 configured to heat tap hot water in the tap hot water preparation system 500. The heater 130 may comprise a tank for accumulating tap hot water for distribution upon request. The tap hot water provided by the heater 130 should preferably be between 50°C and 60°C. It is of importance that the tap hot water is not heated to a too high temperature, i.e. above 60°C, as this could potentially cause burns for a person using the tap hot water provided to the building 400. Moreover, having a too low temperature in the heater 130 could potentially cause problems with bacterial growth, such as legionella, and must therefore also be avoided. Temperature sensors could thus be provide to the heater 130 to ensure that the desired temperature of the tap hot water is maintained.

The heater 130 is connected to the heating circuit 116 by a heat transfer fluid inlet 132 connected to the feed conduit 124 of the heating circuit 116 and by a heat transfer fluid outlet 134 connected to the return conduit 126 of the heating circuit 116.

The heat transfer fluid inlet 132 may be connected to the feed conduit 124 by means of a 3-way valve 138. The 3-way valve 138 may be controlled to provide a certain flow rate of heating circuit heat transfer fluid in order to achieve a desired temperature of the tap hot water in the heater 130. Alternatively or in addition, a separate control valve (not shown) could be provided for controlling the flow rate of heating circuit heat transfer fluid to the heater 130.

The heat pump 120 can thus provide thermal energy to the heating circuit 116 for providing comfort heating and to the heater 130 for providing tap hot water to the building 400, when needed. Naturally, the heater 130 may be connected to more than one building 400. Further, the tap hot water system 500 may be provided with more than one heater 130.

The heater 130 may comprise a coiled conduit in which heating circuit heat transfer fluid from the heat transfer fluid inlet 132 is circulated before exiting the heater 130 through the heat transfer fluid outlet 134, the coiled conduit providing a large surface area for effectively extracting heat from the heating circuit heat transfer fluid and depositing heat into the tap hot water in the heater 130.

As is further shown in Fig. 2, a tap hot water heat exchanger 128 may be provided. The tap hot water heat exchanger 128 is configured to transfer heat from local heat transfer fluid provided to the tap hot water heat exchanger 128 from the local feed conduit 202, via the local heat extracting assembly inlet 102 and via a tap hot water heat exhanger inlet 150 to tap hot water in a tap hot water inlet 142 of the heater 130. The tap hot water heat exhanger inlet 150 is connected to the local heat extracting assembly inlet 102, but could also be connected directly to the local feed conduit 202. As is shown in Fig. 2, a tap hot water heat exchanger control valve 156 could be provided on the tap hot water heat exhanger inlet 150 or on a tap hot water heat exchanger outlet 152 connected to the local heat extracting assembly outlet 104. The tap hot water heat exchanger outlet 152 may be connected directly to the local return conduit 204.

The tap hot water heat exchanger control valve 156 is configured to control the flow of local heat transfer fluid through the tap hot water heat exchanger 128 such that the tap hot water in the tap hot water inlet 142 is sufficiently preheated. The control valve 156 may be controlled in respect of a tap hot water heat exchanger 128 pinch point of 1°C - 5°C, preferably approximately 4°C. I.e. such that in case a temperature of the local heat transfer fluid in the tap hot water heat exchanger inlet 150 is 30°C, the control valve 156 may control the tap hot water heat exchanger 128 to preheat the tap hot water in the tap hot water inlet 142 to between 29°C and 25°C.

The tap hot water heat exchanger 128 thus provides preheated tap hot water to the heater 130, which is further heated and regulated to maintain the preferred temperature by means of the heating circuit heat transfer fluid provided via the heat transfer fluid inlet 132 from the heating circuit 116. The tap hot water inlet 142 is connected to a fresh water supply 140, e.g. to a mains water supply.

Moreover, a tap hot water supply conduit 144 from the heater 130 through which tap hot water is provided to the building 400 may be connected to the fresh water supply 140. The tap hot water supply conduit 144 may be connected to the fresh water supply 140 via a safety conduit 136 by means of a 3-way valve 146 provided on the fresh water supply 140. The safety conduit 136 allows further regulation of the temperature of the tap hot water provided in the tap hot water supply conduit 144 to the building 400. The fresh water supply 140 provides fresh water being significantly colder than the tap hot water and could thus be used to cool the tap hot water if for some reason the tap hot water in the tap hot water supply conduit 144 is determined to be too hot.

A tap hot water return conduit 154 is also provided which is connected to the tap hot water inlet 142. A tap hot water circulation pump 148 may be provided for achieving circulation of the tap hot water between the heater 130 and the building 400. The tap hot water return conduit 154 further provides tap hot water recirculation, such that tap hot water can be circulated in the building 400 when no tap is open such that less water have to be wasted in order to make the tap hot water reach each tap location in the building 400.

In one embodiment, a safety valve (not shown) may be provided to the safety conduit 136 which opens in case the temperature of the tap hot water in the tap hot water supply conduit 144 is too hot, i.e. above 60°C. The safety valve may be formed by the 3-way valve 146 provided on the fresh water supply 140. The tap hot water from the tap hot water supply conduit 144 will thus if necessary be diluted with colder fresh water from the safety conduit 136, reducing the risk of too hot tap water reaching the building 400.

The teachings herein facilitate providing heating by means of district heating systems to more remote locations. This is achieved as the district heating grid 300 is separated by means of the local energy distributing heat exchanger 214 from the local energy distributing system 200. This separation reduces the demands on the district heating grid 300, especially on the pumps and conduits thereof which is often a limiting factor for expansion of district heating grids. Expansion of any district heating grid means that higher pressure must be provided in order to achieve a desired flow rate of heat transfer fluid therein and for district heating grids, even if a circulation pump could reach the new required pressure, the grid (i.e. the conduits) itself could very well instead be the limiting factor. The provision of the local energy distributing system 200, which may extend between buildings 400 in an area where expansion of the district heating grid 300 is desired, allows provision of district heating to larger and more remote locations.

Moreover, the local energy distributing system 200 is further fluidly separated from the local heat extracting assembly 100 by means of the first heat exchanger 106 and the tap hot water heat exchanger 106. The heat pump 120 provides efficient thermal energy transfer for both comfort heating and for providing tap hot water.

The thermal transfer is thus performed in more stages than compared to prior art systems, which allows more thermal energy to be extracted. The increased thermal energy extraction by the local heat extracting assembly 100 and the local energy distributing system 200 consequently further reduces the demands on the district heating grid 300. The flow rate of district heating heat transfer fluid can thus be reduced while still achieving the desired thermal energy transfer, i.e. heat extraction.

The temperature of the local heat transfer fluid in the local energy distributing system 200 can be held lower than that of the district heating heat transfer fluid in the district heating grid 300, reducing the need for insulation and reducing losses to the ground in which the local supply conduit 202 and the local return conduit 204 is buried.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims.

## Claims

1. A local heat extracting assembly (100) having an inlet (102) connectable to a local feed conduit (202) of a local energy distributing system, and an outlet (104) connectable to a local return conduit (204) of the local energy distributing system (200), wherein the local heat extracting assembly (100) comprises:
an intermediate circuit (114) configured to circulate intermediate heat transfer fluid;
a heating circuit (116) comprising a feed conduit (124) and a return conduit (126), the heating circuit (116) being configured to circulate heat transfer fluid in a building (400) for providing comfort heating;
a first heat exchanger (106) configured to extract heat from local heat transfer fluid of the local feed conduit (202) to intermediate heat transfer fluid of the intermediate circuit (114);
a heat pump (120) configured to pump heat from intermediate heat transfer fluid of the intermediate circuit (114) to heat transfer fluid of the heating circuit (116); and
a tap hot water preparation system (500) comprising:
a heater (130) configured to heat tap hot water in the tap hot water preparation system (500), the heater (130) being connected to the heating circuit (116) by a heat transfer fluid inlet (132) connected to the feed conduit (124) of the heating circuit (116) and by a heat transfer fluid outlet (134) connected to the return conduit (126) of the heating circuit (116), **characterized in that** the tap hot water preparation system further comprising
a tap hot water heat exchanger (128) configured to extract heat from local heat transfer fluid of the local feed conduit (202) to tap hot water in a tap hot water inlet (142) of the heater (130).

2. The local heat extracting assembly (100) according to claim 1, wherein the heat transfer fluid inlet (132) is connected to the feed conduit (124) of the heating circuit (116) via a control valve (138) configured to selectively control the flow of heat transfer fluid in the heat transfer fluid inlet (132) of the heater (130).

3. The local heat extracting assembly (100) according to claim 1 or 2, further comprising a tap hot water heat exchanger control valve (156) configured to control the flow of local heat transfer fluid through the tap hot water heat exchanger (128).

4. The local heat extracting assembly (100) according to any one of claims 1-3, wherein the tap hot water inlet (142) is connectable to a fresh water supply (140) and wherein a tap hot water supply conduit (144) to the building (400) is connected to the fresh water supply (140).

5. The local heat extracting assembly (100) according to any one of the preceding claims, wherein the intermediate heat transfer fluid of the intermediate circuit (114) is fluidly separated from the local heat transfer fluid of the local energy distributing system (200).

6. The local heat extracting assembly (100) according to any one of the preceding claims, wherein the heat transfer fluid of the heating circuit (116) is fluidly separated from the intermediate heat transfer fluid of the intermediate circuit (114).

7. The local heat extracting assembly (100) according to any one of the preceding claims, wherein the heating circuit heat transfer fluid in the heating circuit feed conduit (124) is heated by the heat pump (120) to between 30°C and 70°C, preferably between 40°C and 60°C.

8. A local energy distributing system (200) connected to a district heating grid (300), the local energy distributing system (200) comprising a local feed conduit (202) and a local return conduit (204) for circulating local heat transfer fluid, wherein the local energy distributing system (200) comprises at least one local heat extracting assembly (100) according to any one of claims 1 to 7.

9. The local energy distributing system (200) according to claim 8, wherein local heat transfer fluid of the local energy distributing system (200) is fluidly separated from district heating heat transfer fluid of the district heating grid (300).

10. The local energy distributing system (200) according to claim 9, wherein the local energy distributing system (200) is connected to the district heating grid (300) via a local energy distributing system heat exchanger (214) configured to transfer heat from the district heating heat transfer fluid to the local heat transfer fluid.

11. The local energy distributing system (200) according to any one of claims 8 to 10, wherein the temperature of the local heat transfer fluid in the local feed conduit (202) is between 30°C and 50°C, preferably approximately 40°C and wherein the temperature of the local heat transfer fluid in the local return conduit (204) is between 5°C and 35°C.

12. The local energy distributing system (200) according to claim 10, wherein the local energy distributing system heat exchanger (214) is connected to the district heating grid (300) via a main supply conduit (208) connected to a hot conduit (302) of the district heating grid (300) and a main return conduit (210) connected to a cold conduit (304) of the district heating grid (300), the district heating heat transfer fluid in the main supply conduit (208) is between 75°C and 110°C, and wherein the local energy distributing system heat exchanger (214) is controlled such that the district heating heat transfer fluid in the main return conduit (210) is between 7°C and 33°C.

13. The local energy distributing system (200) according to claim 12, further comprising a main control valve (212) configured to control the flow between the local energy distributing system heat exchanger (214) and the district heating grid (300).

## Patentansprüche

1. Lokale Wärmeextraktionsanordnung (100) mit einem Einlass (102), der mit einer lokalen Vorlaufleitung (202) eines lokalen Energieverteilungssystems verbindbar ist, und einem Auslass (104), der mit einer lokalen Rücklaufleitung (204) des lokalen Energieverteilungssystems (200) verbindbar ist, wobei die lokale Wärmeextraktionsanordnung (100) umfasst:
einen Zwischenkreis (114), der dafür ausgelegt ist, Zwischenwärmeübertragungsfluid umzuwälzen;
einen Heizkreis (116), der eine Vorlaufleitung (124) und eine Rücklaufleitung (126) umfasst, wobei der Heizkreis (116) dafür ausgelegt ist, Wärmeübertragungsfluid in einem Gebäude (400) umzuwälzen, um Komfortwärme bereitzustellen;
einen ersten Wärmetauscher (106), der dafür ausgelegt ist, Wärme von lokalem Wärmeübertragungsfluid der lokalen Vorlaufleitung (202) zu Zwischenwärmeübertragungsfluid des Zwischenkreises (114) zu extrahieren;
eine Wärmepumpe (120), die dafür ausgelegt ist, Wärme von Zwischenwärmeübertragungsfluid des Zwischenkreises (114) zu Wärmeübertragungsfluid des Heizkreises (116) zu pumpen; und
ein Leitungswarmwasser-Aufbereitungssystem (500), welches umfasst:
ein Heizgerät (130), das dafür ausgelegt ist, Leitungswarmwasser im Leitungswarmwasser-Aufbereitungssystem (500) zu erwärmen, wobei das Heizgerät (130) mit dem Heizkreis (116) durch einen Wärmeübertragungsfluideinlass (132) verbunden ist, der mit der Vorlaufleitung (124) des Heizkreises (116) verbunden ist, und
durch einen Wärmeübertragungsfluidauslass (134), der mit der Rücklaufleitung (126) des Heizkreises (116) verbunden ist,
**dadurch gekennzeichnet, dass** das Leitungswarmwasser-Aufbereitungssystem ferner einen Leitungswarmwasser-Wärmetauscher (128) umfasst, der dafür ausgelegt ist, Wärme von lokalem Wärmeübertragungsfluid der lokalen Vorlaufleitung (202) zu Leitungswarmwasser in einem Leitungswarmwassereinlass (142) des Heizgerätes (130) zu extrahieren.

2. Lokale Wärmeextraktionsanordnung (100) nach Anspruch 1, wobei der Wärmeübertragungsfluideinlass (132) mit der Vorlaufleitung (124) des Heizkreises (116) über ein Steuerventil (138) verbunden ist, das dafür ausgelegt ist, den Durchfluss von Wärmeübertragungsfluid im Wärmeübertragungsfluideinlass (132) des Heizgerätes (130) selektiv zu steuern

3. Lokale Wärmeextraktionsanordnung (100) nach Anspruch 1 oder 2, welche ferner ein Steuerventil (156) des Leitungswarmwasser-Wärmetauschers umfasst, das dafür ausgelegt ist, den Durchfluss von lokalem Wärmeübertragungsfluid durch den Leitungswarmwasser-Wärmetauscher (128) zu steuern.

4. Lokale Wärmeextraktionsanordnung (100) nach einem der Ansprüche 1-3, wobei der Leitungswarmwassereinlass (142) mit einer Frischwasserzufuhr (140) verbindbar ist und wobei eine Leitungswarmwasser-Zufuhrleitung (144) zum Gebäude (400) mit der Frischwasserzufuhr (140) verbunden ist.

5. Lokale Wärmeextraktionsanordnung (100) nach einem der vorhergehenden Ansprüche, wobei das Zwischenwärmeübertragungsfluid des Zwischenkreises (114) vom lokalen Wärmeübertragungsfluid des lokalen Energieverteilungssystems (200) fluidisch getrennt ist.

6. Lokale Wärmeextraktionsanordnung (100) nach einem der vorhergehenden Ansprüche, wobei das Wärmeübertragungsfluid des Heizkreises (116) vom Zwischenwärmeübertragungsfluid des Zwischenkreises (114) fluidisch getrennt ist.

7. Lokale Wärmeextraktionsanordnung (100) nach einem der vorhergehenden Ansprüche, wobei das Heizkreis-Wärmeübertragungsfluid in der Heizkreis-Vorlaufleitung (124) von der Wärmepumpe (120) auf 30 °C bis 70 °C, vorzugsweise 40 °C bis 60 °C erwärmt wird.

8. Lokales Energieverteilungssystem (200), welches mit einem Fernwärmenetz (300) verbunden ist, wobei das lokale Energieverteilungssystem (200) eine lokale Vorlaufleitung (202) und eine lokale Rücklaufleitung (204) zum Umwälzen von lokalem Wärmeübertragungsfluid umfasst, wobei das lokale Energieverteilungssystem (200) mindestens eine lokale Wärmeextraktionsanordnung (100) nach einem der Ansprüche 1 bis 7 umfasst.

9. Lokales Energieverteilungssystem (200) nach Anspruch 8, wobei das lokale Wärmeübertragungsfluid des lokalen Energieverteilungssystems (200) von dem Fernwärme-Wärmeübertragungsfluid des Fernwärmenetzes (300) fluidisch getrennt ist.

10. Lokales Energieverteilungssystem (200) nach Anspruch 9, wobei das lokale Energieverteilungssystem (200) mit dem Fernwärmenetz (300) über einen Wärmetauscher (214) des lokalen Energieverteilungssystems verbunden ist, der dafür ausgelegt ist, Wärme vom Fernwärme-Wärmeübertragungsfluid auf das lokale Wärmeübertragungsfluid zu übertragen.

11. Lokales Energieverteilungssystem (200) nach einem der Ansprüche 8 bis 10, wobei die Temperatur des lokalen Wärmeübertragungsfluids in der lokalen Vorlaufleitung (202) zwischen 30 °C und 50 °C, vorzugsweise ungefähr 40 °C beträgt und wobei die Temperatur des lokalen Wärmeübertragungsfluids in der lokalen Rücklaufleitung (204) zwischen 5 °C und 35 °C beträgt.

12. Lokales Energieverteilungssystem (200) nach Anspruch 10, wobei der Wärmetauscher (214) des lokalen Energieverteilungssystems mit dem Fernwärmenetz (300) über eine mit einer Warmleitung (302) des Fernwärmenetzes (300) verbundene Hauptzufuhrleitung (208) und eine mit einer Kaltleitung (304) des Fernwärmenetzes (300) verbundene Hauptrücklaufleitung (210) verbunden ist, wobei das Fernwärme-Wärmeübertragungsfluid in der Hauptzufuhrleitung (208) eine Temperatur zwischen 75 °C und 110 °C aufweist und wobei der Wärmetauscher (214) des lokalen Energieverteilungssystems so gesteuert wird, dass das Fernwärme-Wärmeübertragungsfluid in der Hauptrücklaufleitung (210) eine Temperatur zwischen 7 °C und 33 °C aufweist.

13. Lokales Energieverteilungssystem (200) nach Anspruch 12, welches ferner ein Hauptsteuerventil (212) umfasst, das dafür ausgelegt ist, den Durchfluss zwischen dem Wärmetauscher (214) des lokalen Energieverteilungssystems und dem Fernwärmenetz (300) zu steuern.

## Revendications

1. Ensemble d'extraction de chaleur local (100) comportant une entrée (102) apte à être raccordée à un conduit d'alimentation local (202) d'un système de distribution d'énergie local, et une sortie (104) apte à être raccordée à un conduit de retour local (204) du système de distribution d'énergie local (200), dans lequel l'ensemble d'extraction de chaleur local (100) comprend :
un circuit intermédiaire (114) configuré pour faire circuler du fluide caloporteur intermédiaire ;
un circuit de chauffage (116) comprenant un conduit d'alimentation (124) et un conduit de retour (126), le circuit de chauffage (116) étant configuré pour faire circuler du fluide caloporteur dans un bâtiment (400) afin de fournir du chauffage de confort ;
un premier échangeur de chaleur (106) configuré pour extraire de la chaleur à partir du fluide caloporteur local du conduit d'alimentation local (202) vers le fluide caloporteur intermédiaire du circuit intermédiaire (114) ;
une pompe à chaleur (120) configurée pour pomper de la chaleur à partir du fluide caloporteur intermédiaire du circuit intermédiaire (114) vers le fluide caloporteur du circuit de chauffage (116) ; et
un système de préparation d'eau chaude du robinet (500) comprenant :
un chauffage (130) configuré pour chauffer de l'eau chaude du robinet dans le système de préparation d'eau chaude du robinet (500), le chauffage (130) étant raccordé au circuit de chauffage (116) par une entrée de fluide caloporteur (132) raccordée au conduit d'alimentation (124) du circuit de chauffage (116) et par une sortie de fluide caloporteur (134) raccordée au conduit de retour (126) du circuit de chauffage (116), **caractérisé en ce que** le système de préparation d'eau chaude du robinet comprend en outre
un échangeur de chaleur d'eau chaude du robinet (128) configuré pour extraire de la chaleur à partir du fluide caloporteur local du conduit d'alimentation local (202) vers l'eau chaude du robinet dans une entrée d'eau chaude du robinet (142) du chauffage (130).

2. Ensemble d'extraction de chaleur local (100) selon la revendication 1, dans lequel l'entrée de fluide caloporteur (132) est raccordée au conduit d'alimentation (124) du circuit de chauffage (116) par le biais d'une soupape de commande (138) configurée pour commander sélectivement l'écoulement de fluide caloporteur dans l'entrée de fluide caloporteur (132) du chauffage (130).

3. Ensemble d'extraction de chaleur local (100) selon la revendication 1 ou 2, comprenant en outre une soupape de commande d'échangeur de chaleur d'eau chaude du robinet (156) configurée pour commander l'écoulement de fluide caloporteur local à travers l'échangeur de chaleur d'eau chaude du robinet (128).

4. Ensemble d'extraction de chaleur local (100) selon l'une quelconque des revendications 1 à 3, dans lequel l'entrée d'eau chaude du robinet (142) peut être raccordée à une alimentation en eau fraîche (140) et dans lequel un conduit d'alimentation d'eau chaude du robinet (144) vers le bâtiment (400) est raccordé à l'alimentation en eau fraîche (140).

5. Ensemble d'extraction de chaleur local (100) selon l'une quelconque des revendications précédentes, dans lequel le fluide caloporteur intermédiaire du circuit intermédiaire (114) est séparé fluidiquement du fluide caloporteur local du système de distribution d'énergie local (200).

6. Ensemble d'extraction de chaleur local (100) selon l'une quelconque des revendications précédentes, dans lequel le fluide caloporteur du circuit de chauffage (116) est séparé fluidiquement du fluide caloporteur intermédiaire du circuit intermédiaire (114).

7. Ensemble d'extraction de chaleur local (100) selon l'une quelconque des revendications précédentes, dans lequel le fluide caloporteur du circuit de chauffage dans le conduit d'alimentation (124) du circuit de chauffage est chauffé par la pompe à chaleur (120) à une température entre 30 °C et 70 °C, de préférence entre 40 °C et 60 °C.

8. Système de distribution d'énergie local (200) raccordé à un réseau de chauffage urbain (300), le système de distribution d'énergie local (200) comprenant un conduit d'alimentation local (202) et un conduit de retour local (204) pour la circulation de fluide caloporteur local, dans lequel le système de distribution d'énergie local (200) comprend au moins un ensemble d'extraction de chaleur local (100) selon l'une quelconque des revendications 1 à 7.

9. Système de distribution d'énergie local (200) selon la revendication 8, dans lequel le fluide caloporteur local du système de distribution d'énergie local (200) est séparé fluidiquement du fluide caloporteur de chauffage urbain du réseau de chauffage urbain (300).

10. Système de distribution d'énergie local (200) selon la revendication 9, dans lequel le système de distribution d'énergie local (200) est raccordé au réseau de chauffage urbain (300) par le biais d'un échangeur de chaleur de système de distribution d'énergie local (214) configuré pour transférer de la chaleur à partir du fluide caloporteur de chauffage urbain vers le fluide caloporteur local.

11. Système de distribution d'énergie local (200) selon l'une quelconque des revendications 8 à 10, dans lequel la température du fluide caloporteur local dans le conduit d'alimentation local (202) est comprise entre 30 °C et 50 °C, s'élevant de préférence à environ 40 °C et dans lequel la température du fluide caloporteur local dans le conduit de retour local (204) est comprise entre 5 °C et 35 °C.

12. Système de distribution d'énergie local (200) selon la revendication 10, dans lequel l'échangeur de chaleur de système de distribution d'énergie local (214) est raccordé au réseau de chauffage urbain (300) par le biais d'un conduit d'alimentation principal (208) raccordé à un conduit chaud (302) du réseau de chauffage urbain (300) et d'un conduit de retour principal (210) raccordé à un conduit froid (304) du réseau de chauffage urbain (300), le fluide caloporteur de chauffage urbain dans le conduit d'alimentation principal (208) est compris entre 75 °C et 110 °C, et dans lequel l'échangeur de chaleur de système de distribution d'énergie local (214) est commandé de telle façon que le fluide caloporteur de chauffage urbain dans le conduit de retour principal (210) est compris entre 7 °C et 33 °C.

13. Système de distribution d'énergie local (200) selon la revendication 12, comprenant en outre une soupape de commande principale (212) configurée pour commander l'écoulement entre l'échangeur de chaleur de système de distribution d'énergie local (214) et le réseau de chauffage urbain (300).
